Europäisches Patentamt

European Patent Office

Office européen des brevets

(11) Veröffentlichungsnummer : **0 252 133 B1**

(19)

(12) **EUROPÄISCHE PATENTSCHRIFT**

(45) Veröffentlichungstag der Patentschrift :
**27.05.92 Patentblatt 92/22**

(51) Int. Cl.⁵ : **G01B 11/06**

(21) Anmeldenummer : **87900638.5**

(22) Anmeldetag : **08.01.87**

(86) Internationale Anmeldenummer :
**PCT/DE87/00002**

(87) Internationale Veröffentlichungsnummer :
**WO 87/04237 16.07.87 Gazette 87/15**

(54) **VERFAHREN ZUR ABBILDENDEN LASERINTERFEROMETRIE.**

(30) Priorität : **08.01.86 DE 3600346**

(43) Veröffentlichungstag der Anmeldung :
**13.01.88 Patentblatt 88/02**

(45) Bekanntmachung des Hinweises auf die
Patenterteilung :
**27.05.92 Patentblatt 92/22**

(84) Benannte Vertragsstaaten :
**AT BE CH DE FR GB IT LI LU NL SE**

(56) Entgegenhaltungen :
**US-A- 3 861 804**
**US-A- 4 618 262**
**IBM Technical Disclosure Bulletin, Band 24,
Nr. 9, Februar 1982, (New York, US), J. Greschner et al.: "Thin film monitor forin situ
measuring of silicon etch rates"
Patent Abstracts of Japan, Band 8, Nr. 72
(P-265)(1509), 4. April 1984 & JP-A-58216904**

(56) Entgegenhaltungen :
**IEEE Transactions on Industrial Electronics
and Control Instrumentation, Band IECI-27,
no. 1, Februar 1980, (New York, US),E. George
Smith: "LSI circuit fabrication process rate
monitoring technique", Seiten 37-39
Solid State Technology, Band 21, Nr. 4, April
1981, (Port Washington, N.Y., US), P.J. Marcoux: "Methods of end pointdetection for
plasma etching"**

(73) Patentinhaber :
**FRAUNHOFER-GESELLSCHAFT ZUR
FÖRDERUNG DER ANGEWANDTEN
FORSCHUNG E.V.
Leonrodstrasse 54
W-8000 München 19 (DE)**

(72) Erfinder : **BETZ, Hans
Ludwig-Kirch Str. 14
W-1000 Berlin 15 (DE)**
Erfinder : **MADER, Hermann
Anna-Str, 10
W-8025 Unterhaching (DE)**
Erfinder : **PELKA, Joachim
Handjerystr. 37
W-1000 Berlin 41 (DE)**

(74) Vertreter : **Schiller, Walter, Dr. et al
Kanzlei Münich, Steinmann, Schiller
Willibaldstrasse 36-38
W-8000 München 21 (DE)**

EP 0 252 133 B1

## Beschreibung

Die Erfindung bezieht sich auf ein verfahren zur Überwachung des Ätzvorganges an dünnen Schichten.

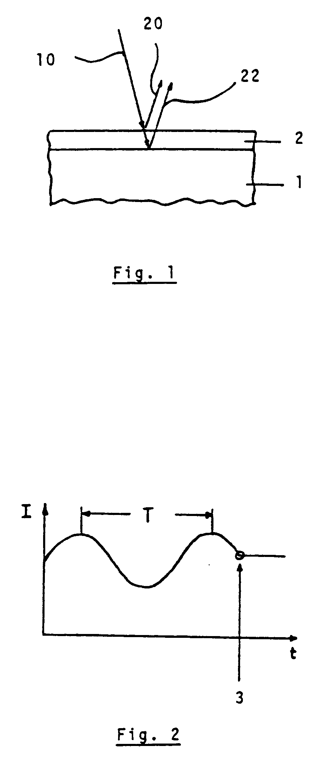

Aus "IBM Technical Disclosure Bulletin", Bd. 24, Nr. 9, Februar 1982, Seite 4804-4805 ist ein verfahren zur Überwachung des Ätzvorganges an dünnen Schichten bekannt,bei dem die zu untersuchende Schicht mit einem Laser bestrahlt und die Intensität des reflektierten Laserstrahls, der sich aus einem an der Oberfläche der zu untersuchenden Schicht und einem an der unteren Grenzfläche der zu untersuchenden Schicht reflektierten Strahl zusammensetzt, detektiert und ausgewertet wird. Dies wird im folgenden näher unter Bezugnahme auf die Figuren 1 und 2 erläutert.

Die zu ätzende Schicht (2), die auf einem Substrat (1) angeordnet ist, wird mit einem Laser bestrahlt. Der einfallende Laserstrahl (10) wird bei transparenten Schichten zum Teil an der Oberfläche der Schicht (2) und zum Teil an der Grenzfläche der Schicht zum Substrat (1) reflektiert. Der reflektierte Laserstrahl setzt sich somit aus zwei Strahlen zusammen, die mit (20) und (22) bezeichnet sind. Die Phasendifferenz der beiden reflektierten Strahlen hängt von der Dicke der zu ätzenden Schicht (2) ab. Je nach Phasenlage bzw. Gangunterschied verstärken sich die Strahlen (20) und (22) oder schwächen sich ab. Ändert sich die Dicke der Schicht (2), wie dies beim Ätzen der Fall ist, so erhält man eine sich ändernde Intensität des resultierenden reflektierten Laserstrahls. Es ergibt sich dabei eine Periodizität der Intensität des reflektierten Laserstrahls, die in Fig. 2 veranschaulicht ist. Aus dem zeitlichen Verlauf der Intensität des reflektierten Laserstrahls, d.h. aus der Periode T, kann die Ätzrate ermittelt werden. Ist die Schicht (2) fortgeätzt worden, so daß der einfallende Laserstrahl (10) lediglich auf das Substrat (1) auffällt, so erhält man im allgemeinen eine Änderung der Reflektivität, so daß sich die Intensität des reflektierten Laserstrahls ändert, wodurch meist ein Knick in der Intensitätskurve entsteht. Dieser Knick zeigt den Endpunkt des Ätzvorganges an, der in Fig. 2 mit dem Bezugszeichen (3) bezeichnet ist.

Das vorstehend beschriebene bekannte Verfahren zur Überwachung des Ätzvorganges an dünnen Schichten erlaubt jedoch nicht das erfassen der Ätzrate in einem bestimmten Bereich.

Nachteilig bei diesem bekannten Verfahren ist weiterhin, daß zur Analyse bestimmter Stellen der zu untersuchenden Schicht eine genaue Justierung erfolgen muß.

Ferner ist es mit dem bekannten Verfahren nicht möglich, den überwachten Bereich beispielsweise auf einem Videomonitor abzubilden.

Es ist zwar bekannt, einen Laserstrahl mittels eines Modulators über einen bestimmten Bereich abzulenken. Derartige als Laserscanner bezeichnete Einrichtungen, die z.B. in der Medizintechnik eingesetzt werden, sind jedoch in der Vergangenheit ausschließlich als bildgebende Verfahren, nicht jedoch für interferometrische Anwendungen verwandt worden.

Der erfindung liegt die Aufgabe zugrunde, ein Verfahren zur Überwachung des Ätzvorganges an dünnen Schichten anzugeben, das nicht nur die Überwachung eines bestimmten Bereichs, sondern auch die Darstellung eines Bildes des überwachten Bereichs gestattet.

Diese Aufgabe wird erfindungsgemäß dadurch gelöst, daß das aus der eingangs genannten Literaturstelle bekannte Verfahren dadurch weitergebildet wird, daß der zur Erhöhung der Auflösung fokussierte Laserstrahl zweidimensional eine bestimmte Fläche der zu untersuchenden Schicht überstreicht, daß mittels eines Datenverarbeitungssystems die detektierte Intensität des reflektierten Laserstrahls zur Erzeugung eines Bildes der abgetasteten Oberfläche auf einem Bildschirm und/oder Plotter dargestellt wird, und daß mittels des Datenverarbeitungssystems für einen frei wählbaren Punkt der abgetasteten Oberfläche aus dem zeitlichen Verlauf der detektierten Intensität des reflekttierten Laserstrahls die Ätzrate und der Ätz-Endpunkt bestimmt werden.

Durch die Erfindung ist eine Abbildung der zu untersuchenden Fläche mittels eines Laserinterferometers ermöglicht worden. Der Laserstrahl überstreicht dabei eine definierte Fläche der zu untersuchenden Schicht, wobei er zweidimensional abgelenkt wird. Entsprechend der punkt-bzw. zeilenweisen Überstreichung kann die Intensität des reflektierten Laserstrahls für die gesamte untersuchte Fläche punktweise ermittelt und über das angeschlossene Datenverarbeitungssystem ausgewertet werden. Das erfindungsgemäße Verfahren vereinfacht die Anwendung des Laserinterferometers, da keine aufwendige Justierung der zu analysierende Stelle vor der Untersuchung erfolgen muß, sondern vielmehr eine elektronische Lokalisierung erfolgt. Es können nun auch sehr kleine Zonen analysiert werden, z.B. Kontaktlöcher. Das erfindungsgemäße Verfahren kann damit auch bei sehr kleinem Verhältnis von zu ätzender zu maskierter Fläche angewendet werden.

Dabei ist es besonders vorteilhaft, daß die Ortsauflösung des Laserstrahls beispielsweise mittels eines Linsensystems erhöht wird, über das der Laser- strahl auf die zu untersuchende Schicht abgebildet und fokussiert wird.

Bei dem erfindungsgemäßen Laserinterferometer wird zweckmäßig ein He-Ne-Laser oder ein UV-Laser verwendet. Selbstverständlich können auch andere Lasertypen verwendet werden: beispielsweise hat sich der Einsatz eines in seiner Wellenlänge durchstimmbaren Lasers in einer Reihe von Anwendungsfällen als zweckmäßig erwiesen.

Bei dem erfindungsgemäßen Verfahren kann der Laserstrahl gemäß Anspruch 2 elektro-mechanisch abgelenkt werden. Dies ermöglicht einen geringen Energieeinsatz und eine rasche Abtastung der zu untersuchenden Fläche.

Bei einer weiteren Verfahrensvariante wird gemäß Anspruch 3 der Laserstrahl mittels eines elektrisch modulierbaren Kristall abgelenkt.

Für die Umlenkung oder Abbildung des Laserstrahls werden bevorzugt optische Mittel eingesetzt. Dabei kann z.B. ein halbdurchlässiger Spiegel verwendet werden. Besonders zweckmäßig ist die Führung des Laserstrahls auf die zu untersuchende Schicht über eine Glasfaseroptik. Dabei wird ein Lichtwellenleiter zweckmäßig über die zu untersuchende Fläche geführt.

Zur Verbesserung des Signal-Rausch-Verhältnisses ist gemäß Anspruch 4 vorgesehen, den Laserstrahl mit einer fest einstellbaren Frequenz zu modulieren und den reflektierten Laserstrahl bei dieser Frequenz schmalbandig zu detektieren.

Eine andere Maßnahme besteht gemäß Anspruch 5 darin, die Mischsignale elektronisch zu trennen und das Signalrauschen zu unterdrücken.

Die erfindungsgemäße Abtastung der zu untersuchenden Schicht ermöglicht zum einen eine Analyse der gesamten Schicht aufgrund der Verwendung des Datenverarbeitungssystems, mittels dessen ein Bild der Oberfläche der zu untersuchenden Schicht erzeugt werden kann. Zum anderen ermöglicht es die Erfindung, eine Analyse in einem gewünschten Punkt der zu untersuchenden Fläche, insbesondere elektronisch auszuführen.

So ist möglich, beim Ätzen dünner Schichten die Ätzrate für einen beliebigen gewünschten Oberflächenpunkt der zu ätzenden transparenten Schicht zu bestimmen.

Bei einer anderen Variante des erfindungsgemäßen Verfahrens wird der Endpunkt des Ätzvorganges in einem beliebig gewünschten Oberflächenpunkt detektiert. Des weiteren ist gemäß Anspruch 6 vorgesehen, auch die Gleichmäßigkeit der Ätzrate bei der zu ätzenden Schicht zu bestimmen.

Bei der Verfahrensvariante gemäß Anspruch 7 wird die Selektivität auf der zu ätzenden Schicht ortsaufgelöst ermittelt.

Gemäß Anspruch 8 ist es in vorteilhafter Weise vorgesehen, den reflektierten Laserstrahl "on-line" zu analysieren. Dies gestattet eine schnelle Anpassung des Ätzens der zu untersuchenden bzw. zu ätzenden Schicht. Des weiteren kann durch zeitlich erfolgende Abläufe die gesamte Fläche dargestellt und im Zusammenhang untersucht werden. Die Signale aus dem Datenverarbeitungssystem werden gemäß Anspruch 9 vorteilhaft zur Prozeßsteuerung verwendet. Dies ermöglicht eine Anpassung des Ätzvorganges unmittelbar an die tatsächlichen Materialgegebenheiten und ein besonders genaues Arbeiten.

Für die Datenwiedergabe werden ein Bildschirm und/oder ein Plotter verwendet. Auf dem Bildschirm kann die Intensität des reflektierten Laserstrahls dargestellt werden, die damit eine Abbildung der untersuchten Fläche liefert. Um diese Darstellung übersichtlicher zu gestalten, können unterschiedlichen Intensitätswerten unterschiedliche Farben zugeordnet werden, so daß ein mehrfarbiges Bild auf dem Bildschirm abgebildet wird, das eine rasche Flächenanalyse der zu untersuchenden Fläche liefert (Anspruch 10). Selbstverständlich können auch die lokalen Ätzraten oder die lokalen Endpunkte des Ätzens dargestellt werden.

Zur Ausführung des erfindungsgemäßen Verfahrens kann ein Laserinterferometer verwendet werden, das lediglich zusätzlich einen Modulator bzw. ein Ablenksystem und ein Datenverarbeitungssystem aufweist. Der Aufbau wird damit nicht wesentlich komplizierter. Bevorzugt weist der Modulator wie bereits ausgeführt - ein elektro-mechanisches Ab-lenksystem, oder einen elektrisch modulierten Kristall auf.

Zur Führung des Laserstrahls auf die zu untersuchende Fläche ist vorteilhaft ein Lichtwellenleiter vorgesehen, der durch eine entsprechende Ablenkeinheit über die zu untersuchende Fläche nachgeführt wird. Zur Erhöhung der Auflösung ist zweckmäßig ein entsprechendes Linsensystem in den Strahlengang eingesetzt, das den Strahl auf die zu untersuchende Fläche fokussiert.

Eine bevorzugte Ausführungsform des zur Ausführung des erfindungsgemäßen Verfahrens verwendeten Interferometers weist eine Einrichtung zur Erhöhung des Signal/Rauschverhältnisses auf. Zu diesem Zweck kann eine Modulationseinrichtung vorgesehen sein, die die Amplitude des Laserstrahls mit einer fest einstellbaren Frequenz moduliert, die entsprechend schmalbandig bei der Modulationsfrequenz detektiert wird. Des weiteren können elektronische Einrichtungen vorgesehen sein, die Mischsignale trennen und das Rauschen unterdrücken.

Das Laserinterferometer weist ferner einen Bildschirm auf. Dieser ermöglicht vorteilhaft eine Nachstellung der zu untersuchenden Fläche, so daß von dieser ein Gesamteindruck z.B. während eines Ätzprozesses erhalten werden kann. Der Vorgang kann auf diese Weise "On-line" beobachtet und untersucht werden. Alternativ oder zusätzlich zu einem Bildschirm kann ein Plotter vorgesehen sein.

Die Erfindung wird im folgenden anhand eines bevorzugten Ausführungsbeispiels unter Bezugnahme auf die Zeichnung weiter erläutert, in der zeigen:

Fig. 1 eine schematische Darstellung des Prinzips eines Laserinterferometers zur Bestimmung des Endpunkts und der Ätzrate beim Ätzen dünner Schichten,

Fig. 2 ein Diagramm, in dem die Intensität des reflektierten Laserstrahls beim atzen einer dünnen transparenten Schicht gegen die Zeit t aufgetragen ist, und aus dem die Ätzrate und der Endpunkt bestimmt werden können,

Fig. 3 eine schematische Darstellung des Aufbaus eines abbildenden Laserinterferometers zur Verwendung im erfindungsgemäßen Verfahren,

Fig. 4 eine schematische Darstellung, die die lokalen Verhältnisse der zu ätzenden Schicht und der Ätzmaske sowie des bestrahlten Bereichs veranschaulicht,

Fig. 5 ein Beispiel einer Darstellung auf einem an das Datenverarbeitungssystem angeschlossenen Bildschirm, und

Fig. 6a und 6b Beispiele von über einen an das Datenverarbeitungssystem angeschlossenen Plotter ausgegebenen Diagrammen, die a) das zeitliche Verhalten der Intensität $I_r$ des reflektierten Laserstrahls sowie die lokale Veränderung der Ätzrate in Ahängigkeit von der Koordinate x darstellen.

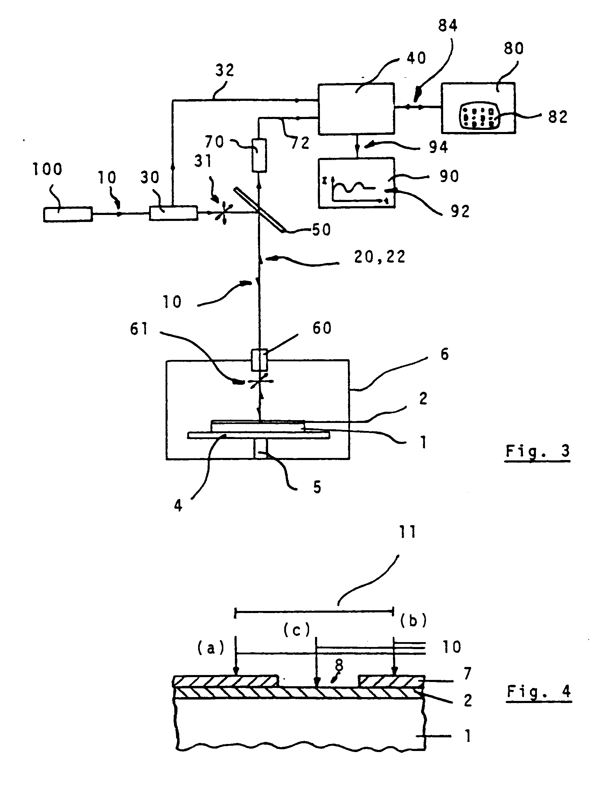

Es wird im folgenden der Aufbau eines abbildenden Laserinterferometers unter Bezugnahme auf die Fig. 3 beschrieben. Ein Laser (100) bei dem es sich z.B. um einen Gaslaser handeln kann, ist als quelle für einen Laserstrahl (10) vorgesehen. ein Modulator (30), der eine Ablenkeinheit darstellt, dient zur zweidimensionalen Auslenkung des Laserstrahls (10), wie durch die gekreuzten Pfeile bei (31) veranschaulicht ist. Vom Modulator (30) führt eine Signalleitung (32) zu einem Datenverarbeitungssystem (40). In den Strahlengang ist ein schräggestellter halbdurchlässiger Spiegel (50) eingefügt, der die auftreffenden Laserstrahlen (10) zum Target, d.h. zu der zu untersuchenden Fläche umlenkt. Dem halbdurchlässigen Spiegel (50) sind oberhalb der zu untersuchenden Schicht optische Mittel (60) nachgeordnet, bei denen es sich z.B. um einen Lichtwellenleiter und/oder um ein Linsensystem handelt kann. Die zum Modulator (30) und zum Datenverarbeitungssystem (40) führenden Leitungen sind aus Gründen der Übersichtlichkeit in dieser schematischen Darstellung fortgelassen.

Beim dargestellten Ausführungsbeispiel wird das Laserinterferometer in Verbindung mit einem Ätzreaktor (6) verwendet. In diesem Ätzreaktor ist auf einem mittels einer Halteeinrichtung (5) getragenen Probenteller (4) eine zu bearbeitende Halbleiterscheibe, d.h. ein Substrat (1) angeordnet. Das Substrat (1) trägt eine Schicht (2), die selektiv fortgeätzt werden soll. Zu diesem Zweck wird üblicherweise eine Ätzmaske verwendet.

Die optischen Mittel (60) und der halbdurchlässige Spiegel (50) lassen die von der zu untersuchenden Fläche reflektierten Laserstrahlen (20, 22) durch. Im optischen Strahlengang, dem halbdurchlässigen Spiegel (50) nachgeordnet, ist ein Detektor (70) vorgesehen. Dieser detektiert die reflektierten Laserstrahlen (20, 22) und wandelt die optischen Informationen in elektronische Datensignale um. Der Detektor (70) ist über eine Leitung (72) mit dem Datenverarbeitungssystem (40) verbunden.

An das Datenverarbeitungssystem ist ein Bildschirmgerät (80) mit Bildschirm (82) angeschlossen. Auf dem Bildschirm ist schematisch ein Bild der untersuchten Fläche dargestellt. Auch das Bildschirmgerät (80) umfaßt Mittel, mittels deren andere Darstellungen vom Datenverarbeitungssystem abgerufen werden können. Dies ist durch den Doppelpfeil bei (84) veranschaulicht. Insoweit ist das Bildschirmgerät in Art eines aktiven Terminals betreibbar. An das Datenverarbeitungssystem (40) ist außerdem ein Plotter (90) angeschlossen. Zur Veranschaulichung ist ein Beispiel (92) eines durch den Plotter wiedergegebenen Diagramms dargestellt. Wie der Pfeil 94 veranschaulicht, ist der Plotter (90) lediglich als Ausgabegerät konzipiert.

Das abbildende Laserinterferometer arbeitet wie folgt: Der von Laser (100) ausgesandte Laserstrahl (10) wird durch den Modulator (30) zweidimensional abgelenkt. Am halbdurchlässigen Spiegel (50) wird der Laserstrahl (10) reflektiert, wobei er im ausgeführten Ausführungsbeispiel eine Umlenkung um 90 Grad erfährt. Anschließend wird der Laserstrahl (10) durch optische Mittel (60) geführt.Der reflektierte Laserstrahl, der sich aus zwei phasenverschobenen Strahlen (20, 22) zusammensetzt, entsprechend der Reflexion des Laserstrahls (10) an der Oberfläche der zu ätzenden Schicht (2) und an deren Grenzfläche zum Substrat (1), wird durch den halbdurchlässigen Spiegel (50) hindurchgeführt und vom Detektor (70) empfangen. Im Detektor (70) werden die optischen Informationen in elektrische Signale umgewandelt und dem Datenverarbeitungssystem (40) zugeführt. Das Datenverarbeitungssystem (40) empfängt auch Signale vom Modulator (30), die seine Ablenkfunktion betreffen und die zeitlich richtige Korrelation der empfangenen Daten sowie deren Auswertung ermöglichen. Im Datenverarbeitungssystem (40) werden die elektrischen Signale verarbeitet und periphere Einheiten, wie z.B. das Bildschirmgerät (80) und den Plotter (90) ausgegeben.

Auf diese Weise können während des Arbeitsvorgangs an der zu untersuchenden Fläche deren Daten ermittelt werden, sowie die zu untersuchende bzw. zu bearbeitende Fläche dargestellt werden. Bei einem Ätzvorgang können auf diese weise z.B. die Ätzrate, der Endpunkt, die Selektivität des Ätzens während des Ätzvorganges, d.h. "On-line" verarbeitet und wiedergegeben werden.

In Fig. 4 ist eine mit dem abbildenden Laserinterferometer zu untersuchende Fläche im einzelnen dargestellt. Das Substrat (1) ist schematisch angedeutet, während die Schicht (2) und die Ätzmaske (7) im Schnitt dargestellt sind. Die Ätzmaske (7) erstreckt sich nicht über die gesamte Schicht, sondern läßt vielmehr bei (8) einen Bereich der Schicht (2) frei, in dem diese fortgeätzt werden soll. Die ausgewählte, zu untersuchende Fläche umfaßt sowohl diesen Bereich (8) als auch Teile der Ätzmaske (7) wie durch die Randstrahlen (a) und (b) für den Laserstrahl (10) veranschaulicht ist. Dieser Bereich ist - eindimensional - durch das Bezugszeichen (11) noch einmal veranschaulicht. Bei einer derartigen Anordnung im Ätzreaktor (6) können über das Bildschirmgerät (80) z.B. folgende Informationen entnommen werden: Die Ätzrate der Schicht (2) bzw. der Ätzmaske (7) in beliebigen Punkten, der Endpunkt der Schicht (2) in jedem beliebigen Punkt sowie gegebenenfalls der Endpunkt der Ätzmaske (7) in jedem beliebigen Punkt der untersuchten Fläche. Außerdem kann die Gleichmäßigkeit des Ätzvorganges überwacht werden. Die Überstreichung von Ätzmaske (7) und Schicht (2) in Bereich (8) ermöglicht es ferner, die Selektivität des Ätzvorganges bei der Schicht (2) in Bezug auf die Ätzmaske (7) darzustellen.

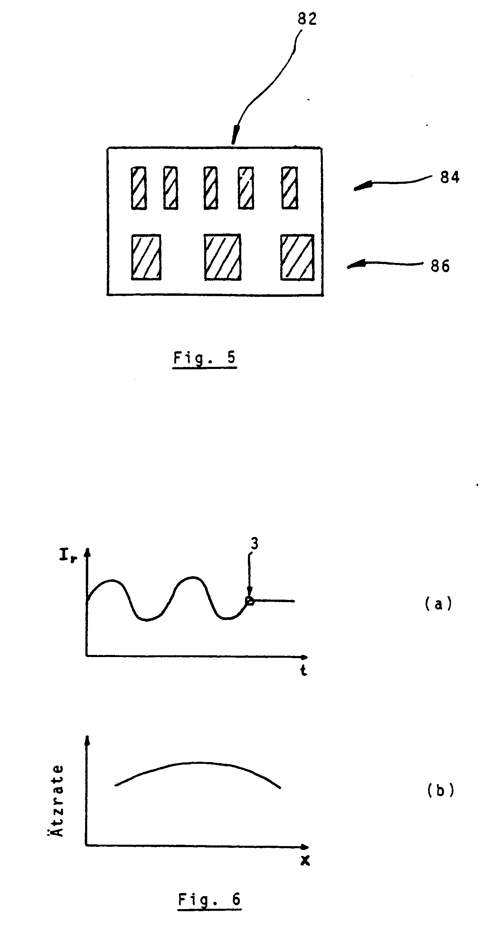

Fig. 5 zeigt sehr schematisch ein auf dem Bildschirmgerät (80) wiedergegebenes Bild (82). Bei (84) sind z.B. Flächendarstellungen der Ätzmaske (7), bei (86) Flächendarstellungen des Bereichs (8) dargestellt. Die einzelnen Darstellungen unterscheiden sich durch die Helligkeit und/oder die Farbe, je nachdem, ob verschiedenen Intensitätswerten verschiedene Helligkeitsstufen oder Farbwerte zugeordnet sind. Wenn sich die Helligkeit oder Farbe auf dem Bildschirm nicht mehr ändert, ist der Endpunkt beim Ätzvorgang erreicht worden.

Fig. 6a und 6b stellen Beispiele von auf dem Plotter (90) wiedergegebenen Diagrammen dar. Fig. 6a veranschaulicht ein Diagramm ähnlich dem in Fig. 3 schematisch dargestellten Diagramm (92). Die Intensität $I_r$ ist gegen die Zeit aufgetragen; der zeitliche Verlauf der Intensität des reflektierten Laserstrahls ist periodisch, bis der Ätzvorgang beendet ist. Dies veranschaulicht der Knick in der dargestellten Kurve bei (3), der den Endpunkt graphisch wiedergibt. Aus diesem Diagramm kann die Ätzrate in einem ausgewählten Punkt ermittelt werden.

Fig. 6b veranschaulicht den Verlauf der Ätzrate längs der untersuchten Fläche. Die Ätzrate ist gegen die Ortskoordinate x aufgetragen. es ergibt sich ein kontinuierlicher, jedoch nicht völlig konstanter Verlauf der Ätzrate. Diese Kurve ermöglicht es, die Gleichmäßigkeit der Ätzrate, die örtliche Selektivität des Ätzfilms sowie den Endpunkt des Ätzens zu bestimmen.

## Patentansprüche

1. Verfahren zur Überwachung des Ätzvorganges an dünnen Schichten,
bei dem die zu untersuchende Schicht (2) mit einem Laser (100) be-strahlt und die Intensität des reflektierten Laserstrahls, der sich aus einem an der Oberfläche der zu untersuchenden Schicht und einem an der unteren Grenzfläche der zu untersuchenden Schicht reflektierten Strahl zusammensetzt, detektiert wird,
bei dem der zur Erhöhung der Auflösung fokussierte Laserstrahl (10) zweidimensional eine bestimmte Fläche der zu untersuchenden Schicht überstreicht,
bei dem mittels eines Datenverarbeitungssystems (40) die detektierte Intensität des reflektierten Laserstrahls zur Erzeugung eine Bildes der abgetasteten Oberfläche auf einem Bildschirm (80) und/oder Plotter (90) dargestellt wird, und bei dem mittels des Datenverarbeitungssystems für einen frei wählbaren Punkt der abgetasteten Oberfläche aus dem zeitlichen Verlauf der detektierten Intensität des reflektierten Laserstrahls die Ätzrate und der Ätz-Endpunkt bestimmt werden.

2. Verfahren nach Anspruch 1,
dadurch **gekennzeichnet,** daß der Laserstrahl elektro-mechanisch abgelenkt wird.

3. Verfahren nach Anspruch 1 oder 2,
dadurch **gekennzeichnet,** daß der Laserstrahl mittels eines elektrisch modulierbaren Kristalls abgelenkt wird.

4. Verfahren nach einem der Ansprüche 1 bis 3,
dadurch **gekennzeichnet,** daß die Intensität des Laserstrahls mit einer fest einstellbaren Frequenz moduliert und der reflektierte Laserstrahl schmalbandig bei der Modulationsfrequenz detektiert wird.

5. Verfahren nach einem der Ansprüche 1 bis 4,
dadurch **gekennzeichnet,** daß Mischsignale elektronisch getrennt werden und das Signalrauschen unterdrückt wird.

6. Verfahren nach einem der Ansprüche 1 bis 5,
dadurch **gekennzeichnet,** daß die Gleichmäßigkeit der Ätzrate und des Endpunkts des Ätzvorganges bei der zu untersuchenden Schicht bestimmt werden.

7. Verfahren nach einem der Ansprüche 1 bis 6,
dadurch **gekennzeichnet,** daß die Selektivität auf der zu ätzenden Schicht ortsaufgelöst ermittelt wird.

8. Verfahren nach einem der Ansprüche 1 bis 7,

dadurch gekennzeichnet, daß die Analyse des reflektierten Laserstrahls "on-line" erfolgt.

9. Verfahren nach einem der Ansprüche 1 bis 8,
dadurch **gekennzeichnet,** daß die Signale aus dem Datenverarbeitungssystem zur Prozeßsteuerung verwendet werden.

10. Verfahren nach einem der Ansprüche 1 bis 9,
dadurch **gekennzeichnet,** daß unterschiedlichen Intensitätswerten des reflektierten Laserstrahls unterschiedliche Farben auf dem Bildschirm zugeordnet werden.

## Claims

1. Method of monitoring the process of etching in thin layers,
wherein the layer (2) to be examined is radiated by a laser (100) and the intensity of the reflected laser beam is detected, which is composed of a beam reflected from the surface of the layer to be examined and a beam reflected from the lower interface of the layer to be examined,
wherein the laser beam (10) focussed so as to improve the resolution passes in two dimensions over a defined surface of the layer to be examined,
wherein by means of a data processing system (40) the detected intensity of the reflected laser beam is represented so as to generate an image of the detected surface on a screen (80) and/or a plotter (90), and
wherein by means of the data processing system the etching rate and the point of termination of etching are determined from the variation of the magnitude of the detected intensity of the reflected laser with time, for any desired point of the detected surface.

2. Method according to Claim 1,
**characterized** in that said laser beam is deflected by electro-mechanical means.

3. Method according to Claim 1 or 2,
**characterized** in that said laser beam is deflected by means of an electrically modulatable crystal.

4. Method according to any of Claims 1 to 3,
**characterized** in that the intensity of the laser beam is modulated with a fixedly adjustable frequency and that the reflected laser beam is detected within a narrow band at the modulation frequency.

5. Method according to anny of Claims 1 to 4
**characterized** in that mixed signals are electronically separated and that the signal noise is suppressed.

6. Method according to any of Claims 1 to 5,
**characterized** in that the uniformity of the etching rate and the point of termination of the etching process are determined in the layer to be examined.

7. Method according to any of Claims 1 to 6,
**characterized** in that the selectivity is determined with local resolution on the layer to be etched

8. Method according to any of Claims 1 to 7,
**characterized** in that the reflected laser beam is analyzed "on line ".

9. Method according to any of Claims 1 to 8,
**characterized** in that the signals from the data processing system are used for process control.

10. Method according to any of Claims 1 to 9,
**characterized** in that different colours on the screen are associated with different intensity values of the reflected laser beam.

## Revendications

1. Procédé de surveiller le processus de gravure dans une couche mince,
dans lequel la couche (2) à examiner est irradiée par un laser (100) et que l'intensité du rayon laser réfléchi est détectée, qui se compose d'un faisceau réfléchi à la surface de la couche à examiner et un faisceau réfléchi à la surface limite inférieure de la couche à examiner,
dans lequel le rayon laser (10) concentré à augmenter la résolution balaye en deux dimensions une surface définie de la couche à examiner,
dans lequel au moyen d'un système de traitement de données (40) l'intensité détectée du rayon laser réfléchi est représentée pour la génération d'une image de la surface explorée sur un écran (80) et/ou un traceur ordinatographe, et
dans lequel au moyen dudit système de traitement de données la cadence de gravure et le bout de gravure sont déterminée pour un point désirable à volonté de la surface explorée, par dérivation de la variation temporelle de l'intensité détectée du rayon laser réfléchi.

2. Procédé selon la revendication 1,
**caractérisé** en ce que ledit rayon laser est dévié par moyens électro-mécaniques.

3. Procédé selon la revendication 1 ou 2,
**caractérisé** en ce que ledit rayon laser est dévié au moyen d'un cristal modulable électriquement.

4. Procédé selon une quelconque des revendications 1 à 3,
**caractérisé** en ce que l'intensité du rayon laser est modulée à une fréquence ajustable à une valeur fixe, et que le rayon laser réfléchi est détecté sur une bande étroite à la fréquence de modulation.

5. Procédé selon une quelconque des revendications 1 à 4,
**caractérisé** en ce que des signaux composés sont séparés électroniquement et que le bruit du signal est atténué.

6. Procédé selon une quelconque des revendications 1 à 5,
**caractérisé** en ce que l'homogénéité de la cadence de gravure et du bout du processus de gravure sont déterminé dans la couche à examiner.

7. Procédé selon une quelconque des revendications 1 à 6,
**caractérisé** en ce que la sélectivité est déterminé à résolution locale sur la couche à graver.

8. Procédé selon une quelconque des revendications 1 à 7,
**caractérisé** en ce que l'analyse du rayon laser réfléchi se fait "en ligne".

9. Procédé selon une quelconque des revendications 1 à 8,
**caractérisé** en ce que les signaux provenant du système de traitement de données sont utilisés à la commande d'un processus industriel.

10. Procédé selon une quelconque des revendications 1 à 9,
**caractérisé** en ce que des couleurs différents sur l'écran sont attribuées aux valeurs d'intensité différentes du rayon laser réfléchi.

Fig. 1

Fig. 2

Fig. 3

Fig. 4

82

84

86

Fig. 5

$I_r$

3

( a )

t

Ätzrate

( b )

x

Fig. 6